# EUROPEAN PATENT SPECIFICATION

(11) **EP 0 622 933 B1**
(45) Date of publication and mention of the grant of the patent: **31.10.2001**
(21) Application number: 94302915.7
(22) Date of filing: 25.04.1994
(51) Int. Cl.: H04M 1/274

(54) **Arrangement for expanding the abbreviated dialling memory of a radio telephone**
Anordnung zum Erweitern des Kurzwahlspeichers eines Sprechfunks
Arrangement pour l'élargissement de mémoire de numérotage abrégé d'un radiophone

(30) Priority: 28.04.1993 FI 931917
(43) Date of publication of application: 02.11.1994
(73) Proprietor: NOKIA MOBILE PHONES LTD., 24101 Salo (FI)
(72) Inventor: Hakala, Olli, SF-24280 Salo (FI); Saarela, Matti, SF-24280 Salo (FI)
(74) Representative: Nordin, Leif Göran

(56) References cited:
- EP-A- 0 456 260
- WO-A-90/06648
- GB-A- 2 256 774

## Description

The invention relates to radio telephones and devices connected to them. WO 90/06648 discloses a radio telephone with an expansion memory card.

The limited size of the abbreviated dialling memory has been a problem in prior art radio telephones. The capacity and use of the abbreviated dialling memory has been sufficient only for carrying out abbreviated dialling and associated functions. This arrangement has not satisfied the users of a radio telephone who require several different additional functions for the radio telephone.

According to the present invention there is provided a radio telephone system comprising a radio telephone in use, connected, via a control bus of the radio telephone, to an external device having a memory, the radio telephone comprising means for copying the contents of the abbreviated dialling memory of the radio telephone into the memory of the external device by pressing a first given sequence into the radio telephone, whereby the memory used by the radio telephone is adapted to be expanded and divided into logic parts, means for bringing into use the internal abbreviated dialling memory of the radio telephone by pressing a second given sequence into the radio telephone and means for bringing into use the abbreviated dialling memory of the external device connected to the control bus of the radio telephone by pressing given sequences into the radio telephone.

The radio telephone may have means for controlling dialling function of the radio telephone by accessing dialling information stored in the external memory, such that the internal memory is available for reprogramming to provide further operational functions for a user. The invention alleviates some of the above drawbacks. The present invention provides an arrangement by which the abbreviated dialling memory can be expanded. In order to achieve this, a radio phone may be connected by a control bus to an external device.

The abbreviated dialling memory of the radio phone is copied into the memory of the external device. The memory used by the mobile phone is thereby expanded and divided into logic parts for utilisation for further functions. The connection may be maintained for a substantial length of time to provide the advantages of the present invention over a reasonable period.

By down loading the contents of the abbreviated dialling memory of a radio telephone into an external memory the abbreviated dialling memory is free to be used for other applications. When access is required to the down loaded abbreviated dialling information this is available by way of a fixed connection to the external memory.

Although his connection is perfectly adequate for utilising dialling information it may be undesirably slow for some functions of the telephone. Once the contents of the abbreviated dialling memory have been down loaded the internal memory can be reprogrammed to provide these functions itself. This reprogramming may be achieved by keying in predetermined key stroke sequences on the key pad or by relevant instructions being down loaded from the external memory or from another external device in connection with the radio telephone.

The external memory may itself be programmable to hold the information required to programme the internal memory to provide predetermined functions. It may also be possible to enter abbreviated dialling information directly into the external memory for use via the control bus connection. Both or either of these functions may optionally, however, be provided by a device external to the radio telephone.

When it is no longer desirable for the radio telephone to be connected to the external memory, the contents of the internal memory originally down loaded may be retrieved if required. The internal memory can then be reconfigured to hold the abbreviated dialling information and/or any other information it had previously stored. The connection to the external memory can then be severed and the radio telephone can return to its initial condition.

The internal memory may be accessed by entry of a sequence of key strokes on the key pad of the radio telephone. This method may also be used to access the external memory. However, when the external memory forms part of a speech recognition unit it may be desirable for audio/vocal commands to be used for access to the external memory. This will be of particular benefit for in-car applications.

When an embodiment of the invention incorporating a speech recognition unit is used, it may be necessary for some of the internal memory of the radio telephone to be utilised to support this operation. Once, however, those memory locations are no longer required to enable operation of the radio telephone in speech command mode, the contents of the relevant internal memory locations can be copied onto the external memory thereby freeing more of the internal memory for further operational functions.

The invention is described in more detail in the following with reference to the appended drawings where:
- Fig. 1: represents a block diagram of the arrangement according to the invention,
- Fig. 2: represents a flow diagram of the arrangement according to the invention.

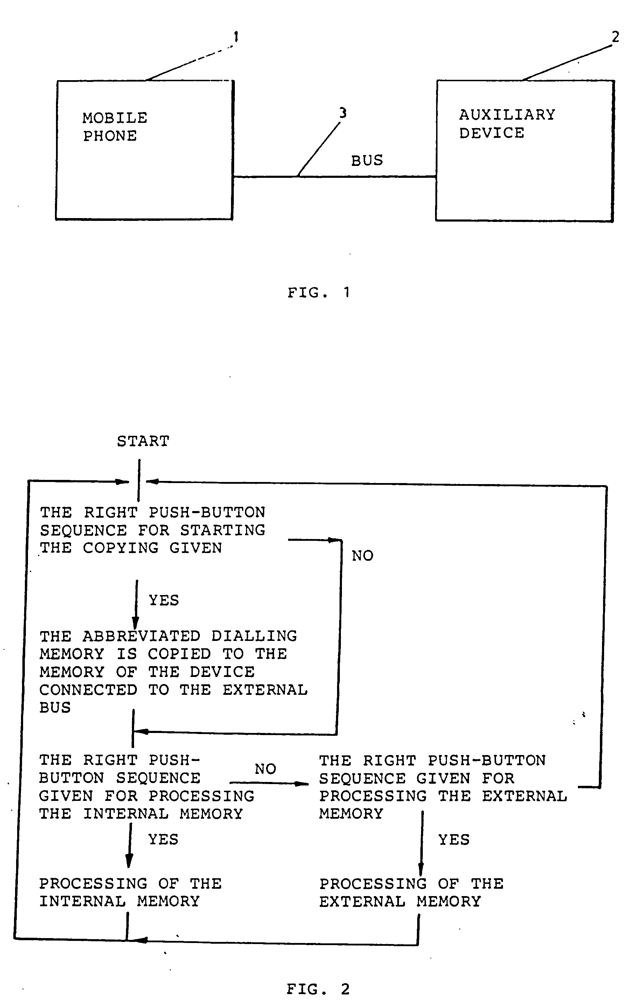

The solution according to the invention is described in the following with reference to Figs. 1 and 2 which show the implementation according to the invention.

Fig. 1 illustrates a block diagram of the arrangement according to an embodiment of the invention. An external device 2 is connected to a control bus 3 of a mobile phone 1. Thus the abbreviated dialling memory of the mobile phone 1 can be copied into the memory of the external device 2. The abbreviated dialling memory used by the mobile phone 1 can be expanded and divided into logic parts with the aid of the arrangement according to an embodiment of the invention.

Fig. 2 represents a flow diagram of the arrangement according to an embodiment of the invention. The contents of the abbreviated dialling memory of mobile phone 1 is first copied into the memory of the external device 2 connected to the control bus 3. The abbreviated dialling memory used by the mobile phone 1 is thereby expanded and divided into logic parts.

The user starts copying by pressing a given sequence into the mobile phone 1. The contents of the abbreviated dialling memory of the mobile phone 1 are copied into the device 2 connected to control bus 3 of the mobile phone 1, such as a speech recognizer, a telephone answering machine, or a computer. After this the abbreviated dialling memory of mobile phone 1 can be reprogrammed.

The internal memory may be reprogrammed by keying in commands by way of a key pad or by copying information relating to the further operational functions of the radio telephone from the external memory. By holding abbreviated dialling information on an external memory and information relating to further operational functions of the radio telephone in the internal memory, delays in accessing functions accessed by way of the control bus are avoided for those functions held on the internal memory. In addition in, for example, speech recognition applications the advantages of holding telephone numbers and voice models on an external memory are also exploited.

Both the reprogrammed abbreviated dialling memory of the mobile phone 1 and the abbreviated dialling memories of the device 2 connected to the control bus 3 of the mobile phone 1 can be used with the aid of the mobile phone 1. The user brings into use the internal abbreviated dialling memory of the mobile phone 1 by pressing a given push-button sequence. Correspondingly, the user brings into use the external abbreviated dialling memories of the device 2 connected to the control bus of the mobile phone by pressing another push-button sequence. External devices other than the mobile phone 1 can also be used to program the memory of the external device 2 connected to control bus 3 of the mobile phone 1.

The arrangement according to an embodiment of the invention can, for instance, be used in speech recognizers, whereby those abbreviated dialling memory locations that include speech recognition can be used. The abbreviated dialling memory of the mobile phone 1 is transferred to the memory of the speech recognizer in the end phase.

The abbreviated dialling memory of the mobile phone 1 connected to the arrangement according to an embodiment of the invention can be reprogrammed. The reprogrammed abbreviated dialling memory can be used with the push-buttons of the mobile phone 1 and the memory of the speech recognizer can be used with speech commands. In the arrangement according to an embodiment of the invention this enables the expansion of the memory being used.

The contents of the abbreviated dialling memory can also be copied into the mobile phone from an external device.

The arrangement according to an embodiment of the invention can be applied to any device having a memory connected to the control bus of the mobile phone. This includes, by way of example a computer or a telephone answering machine as well as a speech recognition unit as discussed above.

## Claims

1. A radio telephone system comprising a radio telephone connected in use, via a control bus (3) of the radio telephone, to an external device (2) having a memory, the radio telephone comprising means for copying the contents of an abbreviated dialling memory of the radio telephone (1) into the memory of the external device (2) by pressing a first given sequence into the radio telephone (1), whereby the memory used by the radio telephone (1) is adapted to be expanded and divided into logic parts, means for bringing into use the internal abbreviated dialling memory of the radio telephone (1) by pressing a second given sequence into the radio telephone (1) and means for bringing into use the abbreviated dialling memory of the external device (2) connected to the control bus (3) of the radio telephone (1) by pressing given sequences into the radio telephone (1).

2. A radio telephone system according to claim 1, wherein the abbreviated dialling memory of the external device (2) connected to the control bus (3) of the mobile phone (1) is adapted to be programmed with the aid of a further external device.

3. A radio telephone system according to any of the preceding claims, wherein the external device (2) is a speech recogniser.

4. A radio telephone system according to claim 3, wherein the abbreviated dialling memory of the radio telephone (1) is adapted to be reprogrammed so that the abbreviated dialling memory can be used with the push-buttons of the radio telephone (1) and the memory of the speech recogniser is adapted so that it can be used by speech commands.

5. A radio telephone system according to claim 4, wherein the abbreviated dialling memory of the radio telephone (1) is adapted to be transferred to the memory of the speech recogniser.

6. A radio telephone system according to claim 1, wherein the contents of the abbreviated dialling memory of the external device are adapted to be copied into the radio telephone from the external device

7. A radio telephone system according to any one of claims 1 or claim 2, wherein the external device (2) is a telephone answering machine.

8. A radio telephone system according to any of claims 1, 2 or 6, wherein the external device (2) is a computer.

## Patentansprüche

1. Funktelefonsystem mit einem Funktelefon, das im Gebrauch über einen Steuerbus (3) des Funktelefons mit einer externen Einrichtung (2) mit einem Speicher verbunden ist, wobei das Funktelefon Folgendes aufweist: eine Einrichtung zum Kopieren des Inhalts eines Kurzwahlspeichers des Funktelefons (1) in den Speicher der externen Einrichtung (2) durch Eintasten einer ersten Abfolge in das Funktelefon (1), wodurch der vom Funktelefon (1) verwendete Speicher so ausgebildet wird, dass er erweitert und in logische Teile unterteilt wird; eine Einrichtung, die dazu dient, den internen Kurzwahlspeicher des Funktelefons (1) dadurch in Gebrauch zu bringen, dass eine zweite vorgegebene Abfolge in das Funktelefon (1) eingetastet wird; und eine Einrichtung, die dazu dient, den Kurzwahlspeicher der mit dem Steuerbus (3) des Funktelefons (1) verbundenen externen Einrichtung (2) dadurch in Gebrauch zu bringen, dass vorgegebene Abfolgen in das Funktelefon (1) eingetastet werden.

2. Funktelefonsystem nach Anspruch 1, bei dem der Kurzwahlspeicher der mit dem Steuerbus (3) des Mobiltelefons (1) verbundenen externen Einrichtung (2) so ausgebildet ist, dass er mittels einer weiteren externen Einrichtung programmierbar ist.

3. Funktelefonsystem nach einem der vorstehenden Ansprüche, bei dem die externe Einrichtung (2) eine Spracherkennungseinrichtung ist.

4. Funktelefonsystem nach Anspruch 3, bei dem der Kurzwahlspeicher des Funktelefons (1) so ausgebildet ist, dass er so umprogrammierbar ist, dass dieser Kurzwahlspeicher mit den Tasten des Funktelefons (1) verwendbar ist und der Speicher der Spracherkennungseinrichtung so ausgebildet ist, dass er durch Sprachbefehle verwendbar ist.

5. Funktelefonsystem nach Anspruch 4, bei dem der Kurzwahlspeicher des Funktelefons (1) so ausgebildet ist, dass er an den Speicher der Spracherkennungseinrichtung übertragbar ist.

6. Funktelefonsystem nach Anspruch 1, bei dem der Inhalt des Kurzwahlspeichers der externen Einrichtung so ausgebildet ist, dass er von der externen Einrichtung in das Funktelefon kopierbar ist.

7. Funktelefonsystem nach einem der Ansprüche 1 oder 2, bei dem die externe Einrichtung (2) ein Anrufbeantworter ist.

8. Funktelefonsystem nach einem der Ansprüche 1, 2 oder 6, bei dem die externe Einrichtung (2) ein Computer ist.

## Revendications

1. Système de radiotéléphone comprenant un radiotéléphone connecté en utilisation, via un bus de commande (3) du radiotéléphone, à un dispositif externe (2) comportant une mémoire, le radiotéléphone comprenant un moyen destiné à recopier le contenu d'une mémoire de composition abrégée du radiotéléphone (1) dans la mémoire du dispositif externe (2) en appuyant sur une première séquence donnée de touches dans le radiotéléphone (1), d'où il résulte que la mémoire utilisée par le radiotéléphone (1) est adaptée pour être étendue et divisée en parties logiques, un moyen destiné à amener en utilisation la mémoire de composition abrégée interne du radiotéléphone (1) en appuyant sur une deuxième séquence donnée de touches dans le radiotéléphone (1) et un moyen destiné à amener en utilisation la mémoire de composition abrégée du dispositif externe (2) connecté au bus de commande (3) du radiotéléphone (1) en appuyant sur les séquences données de touches dans le radiotéléphone (1).

2. Système de radiotéléphone selon la revendication 1, dans lequel la mémoire de composition abrégée du dispositif externe (2) connecté au bus de commande (3) du téléphone mobile (1) est adaptée pour être programmée à l'aide d'un dispositif externe supplémentaire.

3. Système de radiotéléphone selon l'une quelconque des revendications précédentes, dans lequel le dispositif externe (2) est un dispositif de reconnaissance vocale.

4. Système de radiotéléphone selon la revendication 3, dans lequel la mémoire de composition abrégée du radiotéléphone (1) est adaptée pour être programmée de sorte que la mémoire de composition abrégée peut être utilisée avec les boutons-poussoirs du radiotéléphone (1) et la mémoire du dispositif de reconnaissance vocale est adaptée de sorte qu'elle peut être utilisée par des commandes vocales.

5. Système de radiotéléphone selon la revendication 4, dans lequel la mémoire de composition abrégée du radiotéléphone (1) est adaptée pour être transférée vers la mémoire du dispositif de reconnaissance vocale.

6. Système de radiotéléphone selon la revendication 1, dans lequel le contenu de la mémoire de composition abrégée du dispositif externe est adapté pour être recopié dans le radiotéléphone depuis le dispositif externe.

7. Système de radiotéléphone selon l'une quelconque des revendications 1 ou 2, dans lequel le dispositif externe (2) est un répondeur téléphonique.

8. Système de radiotéléphone selon l'une quelconque des revendications 1, 2 ou 6, dans lequel le dispositif externe (2) est un ordinateur.
